# EUROPÄISCHE PATENTSCHRIFT

(11) **EP 0 823 299 B1**
(45) Veröffentlichungstag und Bekanntmachung des Hinweises auf die Patenterteilung: **20.10.1999**
(21) Anmeldenummer: 97111906.0
(22) Anmeldetag: 12.07.1997
(51) Int. Cl.: B22D 17/24, B29C 45/14

(54) **Einrichtung zur Zuführung von Einlegeteilen in ein Formwerkzeug einer Druckguss- oder Spritzgussmaschine**
Apparatus for feeding inserts into a mould of a press casting machine or a die casting machine
Dispositif pour alimenter un moule avec des pièces d'insertion dans un machine à couler à presse ou dans un appareil à coulée sous pression

(30) Priorität: 05.08.1996 DE 19631602
(43) Veröffentlichungstag der Anmeldung: 11.02.1998
(73) Patentinhaber: Müller-Weingarten AG, 88250 Weingarten (DE)
(72) Erfinder: Stummer, Friedrich Georg, Dr., 70736 Fellbach (DE); Götz, Wolfgang, 71364 Winnenden (DE); Schwarz, Tobias, 73728 Esslingen (DE)
(74) Vertreter: Patentanwälte Eisele, Otten, Roth & Dobler

(56) Entgegenhaltungen:
- US-A- 4 252 177
- PATENT ABSTRACTS OF JAPAN vol. 009, no. 179 (M-399), 24.Juli 1985 & JP 60 048316 A (YAMASHIRO SEIKI SEISAKUSHO:KK), 16.März 1985,

## Beschreibung

Die Erfindung betrifft eine Einrichtung zur Zuführung von Einlegeteilen in ein Formwerkzeug einer Druckguß- oder Spritzgußmaschine nach dem Oberbegriff des Anspruchs 1.

### Stand der Technik:

Bei einer Reihe von Druckgußteilen oder auch Spritzgußteilen ist es funktionsbedingt notwendig, Lagerzapfen, Haltestifte oder ähnliches mit einzugießen, wodurch ein Verbundguß entsteht. Auf diese Weise werden die Eigenschaften von z.B. verschleißfestem und hochbelastbarem Material wie z.B. Stahl durch die Druckguß- oder Spritzgußtechnik mit mechanisch weicherem Material wie z.B. Aluminium oder Kunststoff verbunden.

Bisher erfolgte das Einlegen solcher Teile bei geöffneten Formwerkzeughälften manuell von Hand oder durch spezielle Handhabungsgeräte wie Roboter oder Portalgreifer. Dabei wird eine Automatisierung in aller Regel angestrebt, da aus Arbeitsschutzgründen das Eingreifen des Bedieners in die geöffnete heiße Form während der Zykluszeit nicht unbedenklich ist.

Aus der DE-A1-24 25 493 ist eine Vorrichtung zum Einlegen von Einlegeteilen in Formwerkzeuge für Spritzgußteile bekannt geworden, die nach Art eines Handhabungsgerätes mit einem bewegbaren Transportarm aufgebaut ist, der eine Automatisierung des Einlegevorgangs vollzieht. Auch aus der DE-OS-23 02 611 ist ein Verfahren bzw. eine Vorrichtung bekannt geworden, mit welcher mehrere Einlegeteile automatisch dem Formwerkzeug zugeführt werden.

Die Problematik der automatisierten Lösungen besteht insbesondere bei großen Formen in der erforderlichen Positionierungsgenauigkeit. Unter Umständen muß über eine Entfernung von 2 bis 3 m beispielsweise ein Bolzen mit 0,05 mm Spiel in eine Aufnahmebohrung einer Formhälfte eingeführt werden. Durch die zwangsläufigen Temperaturschwankungen wahrend des Gießbetriebes und den damit verbundenen geometrischen Formänderungen ist die Lösung mit einem Handhabungsgerät bzw. einem Roboter nur bis zu bestimmten Grenzen möglich. Ein Portalgreifer hat zwar gegenüber einem Roboter geringe Vorteile, stellt jedoch auch die deutlich teurere Lösung dar.

### Aufgabe, Lösung und Vorteile der Erfindung:

Der Erfindung liegt die Aufgabe zugrunde, die bekannten Einrichtungen zur automatischen Zuführung von Einlegeteilen zu verbessern und insbesondere eine in der Handhabung vereinfachte, störungsunanfällige und kostenmäßig günstigere Lösung zu bieten, bei deutlicher Reduzierung der Einlege- bzw. Nebenzeiten.

Diese Aufgabe wird ausgehend von einer Einrichtung nach der Gattung des Anspruchs 1 durch die kennzeichnenden Merkmale des Anspruchs 1 gelöst.

In den Unteransprüche sind zweckmäßige und vorteilhafte Weiterbildungen der im Hauptanspruch angegebenen Einrichtung ausgeführt.

Der Erfindung liegt der Kerngedanke zugrunde, daß ein problemloses Zuführen von Einlegeteilen einfacher, schneller und sicherer dadurch erfolgt, wenn diese Teile nicht über große Wege insbesondere bei großen Formen über die geöffneten Formwerkzeuge selbst erfolgt. Vielmehr erfolgt die Zuführung der Einlegeteile über einen geeigneten Zuführungskanal innerhalb des Formrahmens bzw. der Aufspannplatte bzw. der Formwerkzeuge selbst. Hierdurch können die Einlegeteile bereits vor dem Einlegevorgang in die Nähe der vorgesehenen Einlegeposition gebracht werden, so daß der eigentliche Einlegevorgang nur noch ein zeitlich und vom Weg her kurzer Vorgang darstellt. Beispielsweise können Bolzen, Scheiben oder dergleichen in einem entsprechendem Zuführungskanal in die Nähe des Positionierungsortes am Formwerkzeug zugeführt werden, so daß letztendlich der eigentliche Einlegevorgang nur noch durch einen abschließenden Arbeitsgang erfolgen kann.

Besonders vorteilhaft ist die Weiterbildung der Erfindung dahingehend, daß die Zuführung der Einlegeteile durch die Schwerkraft selbst erfolgt. Dies geschieht durch einen von oben in Richtung zur Einlegestelle führenden Zuführungskanal, in welchem die Teile selbständig hintereinander transportiert werden.

Die Vereinzelung des jeweils zu positionierenden Einlegeteils in der Formhälfte geschieht vorzugsweise mittels einer Art Aufnahmetasche in einem vorzugsweise als Drehscheibe oder dergleichen ausgebildeten Positionierungsvorrichtung. Durch Drehung der Aufnahmetasche in Richtung zum Formeinsatz bzw. Formwerkzeug kann das Einlegeteil mittels einer Übergabeeinrichtung oder dergleichen aus der Aufnahmetasche heraus in die Endlage im Bereich des Formwerkzeuges transportiert und positioniert werden. Dabei können Endschalter und Positionierungshilfen die genaue Lage des Einlegeteils innerhalb des Formwerkzeugs garantieren.

Die Zuführung der Einlegeteile selbst zum Formrahmen oder dergleichen kann nach einer automatischen Teilekontrolle über automatische Zuführungshilfen wie Rütteltopf oder dergleichen erfolgen, so daß eine fehlerhafte Zuführung von Teilen zum Zuführungskanal zuverlässig vermieden wird.

Ein weiterer Vorteil ist die Verwendung der Übergabeeinrichtung zur Unterstützung des Maschinenauswerfers beim Ausstoßen der fertig gegossenen Teile, da das Entformen der Einlegeteile in der Regel schwierig ist.

Weitere Einzelheiten der Erfindung sind insbesondere auch in den Zeichnungen dargestellt und werden in der nachfolgenden Beschreibung anhand eines Ausführungsbeispiels an einer Druckgußmaschine näher erläutert.

Es zeigen
- Fig. 1: eine Stirnansicht auf eine Aufspannplatte einer Druckgußmaschine,
- Fig. 2: einen Schnitt längs der Schnittlinie A-A in Fig. 1,
- Fig. 3a,b: die Einzelheit "X" in Fig. 2 in verschiedenen Arbeitsstellungen.

### Beschreibung der Erfindung:

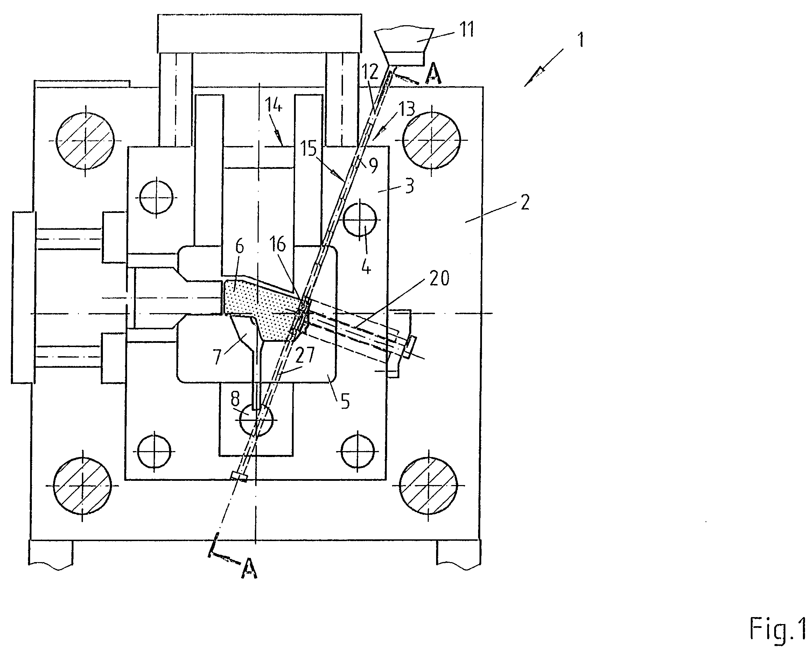

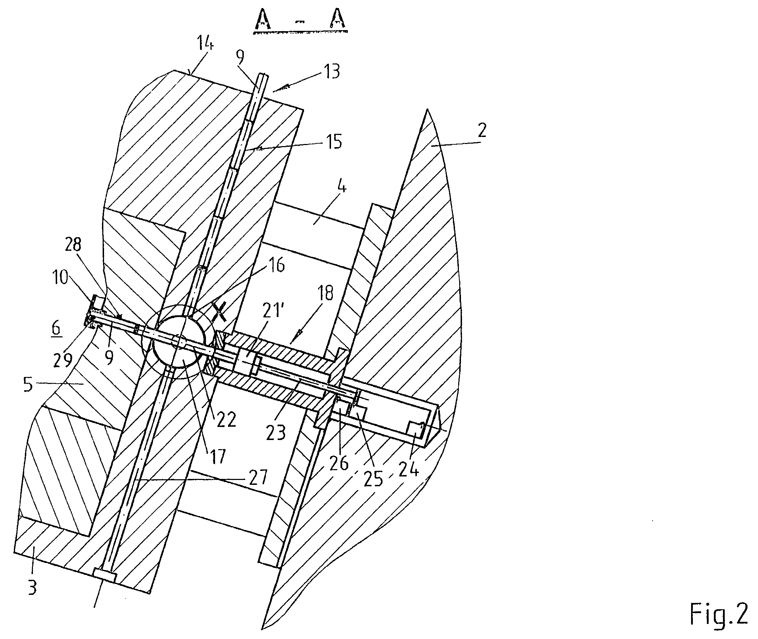

Entsprechend der Darstellung in den Figuren 1 und 2 weist eine Druckgußmaschine 1 eine Aufspannplatte 2 auf, auf welcher ein Formrahmen 3 über Distanzhalter 4 aufgespannt ist. Der Formrahmen 3 dient zur Aufnahme einer Hälfte der Formeinsätze 5, auch "Formwerkzeug" genannt, in welcher sich der Formhohlraum 6 und eventuell auch der Angußkanal 7 befindet, der zur Gießkammer 8 für die Metallschmelze führt.

Im vorliegenden Ausführungsbeispiel sollen beispielsweise spezielle Bolzen 9 dem Formhohlraum 6 genauestens positioniert zugeführt werden, damit diese während des Druckgießprozesses in die Metallschmelze 10 eingebettet werden (s. Fig. 2). Hierfür werden die als Bolzen 9 ausgebildeten Einlegeteile von einem Rütteltopf 11 nach Durchführung einer automatischen Teilekontrolle einem nachfolgenden Trichter 12 zugeführt, der die Bolzen einer Zuführöffnung 13 an der Oberseite 14 des Formrahmens 3 zuführt, dem sich ein Zuführungs- oder Transportkanal 15 für die Bolzen 9 anschließt.

Der Einlegeteile-Zuführungskanal 15 ist derart geführt, daß die Einlegeteile aufgrund ihres eigenen Gewichtes nach unten in Richtung zum Formhohlraum 6 transportiert werden. Dies ist in den Figuren 1 und 2 durch die schräge Stellung des Zuführungskanals 15 zum Formhohlraum 6 dargestellt.

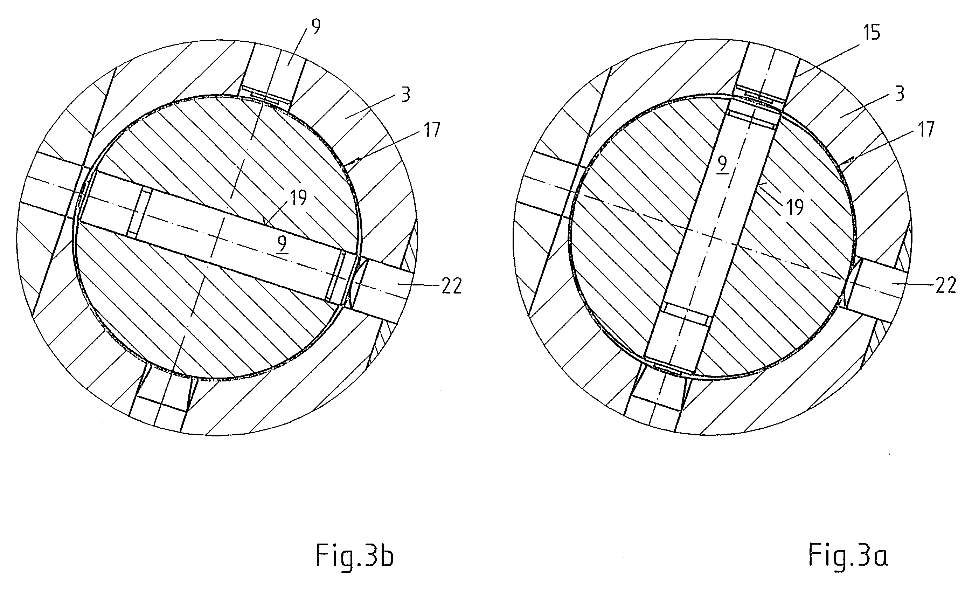

Wie aus der Schnittdarstellung entlang der Schnittlinie A-A in Fig. 1 entsprechend der Darstellung in Fig. 2 hervorgeht, mündet der Zuführungskanal 15 in seinem unteren Bereich 16 an einer, innerhalb des Formrahmens 3 im Bereich des Formhohlraumes 6 angeordneten Drehscheibe 17, die zusammen mit einer Zylindereinheit 18 zur Vereinzelung und positionsgenauen Zuführung des jeweiligen Bolzens 9 in die vorbestimmte Endlage in der Formwerkzeughälfte 5 dient. Um eine Vereinzelung der zugeführten Bolzen 9 durchführen zu können, entspricht der Durchmesser der drehbaren Scheibe 17 der Länge des Bolzens 9. Zur Aufnahme des Bolzens 9 weist die Drehscheibe 17 eine Längsbohrung 19 auf, wie sie in Fig. 3a in der fluchtenden Stellung zum Zuführungskanal 15 näher dargestellt ist.

In der Ausgangsstellung fluchtet die Längsbohrung 19 gemäß der Darstellung nach Fig. 3a demnach mit dem Zuführungskanal 15 innerhalb des Formrahmens 3. Durch die Schwerkraft gelangt der Bolzen 9 in die Drehscheibe 17 wobei durch die Abstimmung der Abmaße der Bolzen 9 durch die Drehscheibe vereinzelt und von ihr aufgenommen wird. Über eine Antriebswelle 20 (s. Fig. 1) wird nun die Drehscheibe um 90° von der Position nach Fig. 3a in die Position nach Fig. 3b gedreht, so daß die Stellung nach Fig. 2 erreicht wird. Die Zylindereinheit 18 weist einen beidseitig beaufschlagbaren Kolben 21 auf, mit einer zur Drehscheibe 17 hinweisenden ersten Kolbenstange 22, die in die Bohrung 19 der Drehscheibe 17 in der Stellung nach Fig. 3b seitlich eindringt und den Bolzen 9 in die in Fig. 2 dargestellte Endposition innerhalb der Formwerkzeughälfte befördert, d.h. der Bolzen wird aus der Bohrung 19 der Drehscheibe 17 in die fluchtende Bohrung 28 in der Formhälfte 5 geschoben und ragt mit seinem Ende 29 in den Formhohlraum 6 hinein. Die Positionierung des Einlegeteils bzw. Bolzens 9 erfolgt dabei vorteilhafterweise bei geschlossenen Formhälften, da hierdurch eine Art Gegenanschlag für das Einlegeteil beim Herausschieben aus der Bohrung 19 bzw. 28 erfolgt. Durch diese Maßnahmen wird weiterhin vermieden, daß das eventuell verwendete Formtrennmittel beim Einsprühen der geöffneten Formhälften auf den Bolzen 9 gelangt, so daß eine sichere Verbindung zwischen Einlegeteil und Gießmaterial gewährleistet ist.

Eine weitere Kolbenstange 23 auf der Rückseite des Kolbens 21 dient als Wegmessereinrichtung und wirkt mit Endschaltern 24 bis 26 zusammen. Dabei bestimmt der in Fig. 2 dargestellte rechte Endschalter 24 die Ausgangsstellung der Zylindereinheit mit zurückgezogener Kolbenstange 22 wie in Fig. 3a dargestellt. Der weitere Endschalter 25 dient zur Endlagebestimmung des aus der Drehscheibe 17 herausgeschobenen Bolzens 9, wie in Fig. 2 dargestellt. Ein weiterer Endschalter 26 wird betätigt, wenn nach dem Erstarren des Gießteils die Kolbenstange 22 als zusätzlichen Auswerfer benutzt wird und die Endlage anzeigt.

Nachdem die Kolbenstange 22 nach erfolgter Positionierung des Bolzens 9 bzw. nach erfolgtem Auswerfvorgang in ihrer Ausgangsstellung zurückgefahren ist, kann die Drehscheibe 17 wieder um 90° zurückgedreht werden, damit ein neuer Bolzen 9 in die Bohrung 19 hineingleiten kann. Die Drehscheibe 17 wird sozusagen "geladen", und die Zylindereinheit 18 positioniert den jeweils geladenen Bolzen 9 in die vorgegebene Einlegestellung in der Formwerkzeughälfte.

Soweit die Darstellung nach Fig. 1 und 2 eine innerhalb des Formrahmens 3 nach unten hin fortgesetzte Bohrung 27 zeigt, so dient diese alternativ als Kontroll- oder Wartungsbohrung bei Störungsfällen. Selbstverständlich könnten auch über eine solche Bohrung gegebenenfalls anders geformte Teile der entsprechenden Zuführeinrichtung zugeführt werden. Weiterhin können auch überzählige Bolzen 9 entnommen werden.

Die Erfindung ist nicht auf das dargestellte beschriebene Ausführungsbeispiel beschränkt. Sie umfaßt auch vielmehr alle fachmännischen Weiterbildungen im Rahmen der Schutzrechtsansprüche. So kann die Erfindung auch für andere Einlegeteile und eine andere geeignete Anordnung des Zuführungskanals bei Druckguß- oder Spritzgußmaschinen verwendet werden.
- 1: Druckgußmaschine
- 2: Ausspannplatte
- 3: Formrahmen
- 4: Distanzhalter
- 5: Formwerkzeug/Formeinsatz
- 6: Formhohlraum
- 7: Angußkanal
- 8: Gießkanal
- 9: Bolzen/Einlegeteil
- 10: Metallschmelze
- 11: Rütteltopf
- 12: Trichter
- 13: Zuführöffnung
- 14: Oberseite von 3
- 15: Zuführungstransportkanal
- 16: unterer Bereich von 15
- 17: Drehscheibe
- 18: zylindrische Einheit
- 19: Längsbohrung
- 20: Antriebswelle
- 21: Kolben
- 22: Kolbenstange
- 23: Kolbenstange
- 24: Endschalter
- 25: Endschalter
- 26: Endschalter
- 27: Bohrung
- 28: Bohrung
- 29: Ende von 9

## Patentansprüche

1. Einrichtung zur fortlaufenden Zuführung und Positionierung von Einlegeteilen (9) in ein Formwerkzeug (5) bzw. Formeinsatz (5) einer Druckguß- oder Spritzgußmaschine, dadurch gekennzeichnet, daß ein in den Bereich des Formwerkzeugs (5) führender Zuführungskanal (15) vorgesehen ist, der zur Aufnahme und Zuführung von Einlegeteilen dient, und daß Mittel (17, 18) zur lagegerechten Positionierung eines dem Zuführungskanal (15) entnommenen Einlegeteils (9) im Formwerkzeug (5) vorgesehen sind.

2. Einrichtung nach Anspruch 1, dadurch gekennzeichnet, daß für eine Schwerkraftförderung der Einlegeteile (9) eine Zuführungsöffnung (13) im oberen Bereich (14) eines Formrahmens (3) angeordnet ist, der den Zuführungskanal (15) mit Gefälle aufnimmt.

3. Einrichtung nach Anspruch 1, dadurch gekennzeichnet, daß der Zuführungskanal (15) im Bereich des Formwerkzeugs (5) in einer Art Aufnahmetasche bzw. Aufnahmebohrung (19) für ein einzelnes Einlegeteil (9) mündet, und daß Mittel (17, 18) zum Weitertransport des Einlegeteils (9) von der Aufnahmebohrung (19) zur vorgegebenen Endposition im Formwerkzeug (5) vorgesehen sind.

4. Einrichtung nach Anspruch 1 oder 3, dadurch gekennzeichnet, daß der Zuführungskanal (15) für die Einlegeteile (9) in einer Drehscheibe (17) mündet, die eine Aufnahme (19) für ein einzelnes Einlegeteil (9) aufweist, daß die Drehscheibe (17) in einer z.B. 90°-Drehbewegung das Einlegeteil (9) zum Formwerkzeug (5) hin ausrichtet, und daß Mittel (18, 22) zum Ausstoßen und lagegerechten Positionieren des Einlegeteils (9) im Formwerkzeug (5) vorgesehen sind.

5. Einrichtung nach Anspruch 1 oder 4, dadurch gekennzeichnet, daß dem Zuführungskanal (15) für die Einlegeteile (9) eine Drehscheibe (17) mit Aufnahmeraum (19) für das Einlegeteil (9) zugeordnet ist, wobei eine Zylindereinheit (18) mit Kolbenstange (22) das Einlegeteil (9) nach Durchführung einer Drehbewegung der Drehscheibe (17) lagerichtig und positionsgenau im Formwerkzeug (5) positioniert.

6. Einrichtung nach einem der vorgehenden Ansprüche, dadurch gekennzeichnet, daß die Zylindereinheit (18) eine zusätzliche Teile-Ausstoßfunktion aufweist.

7. Einrichtung nach Anspruch 5, dadurch gekennzeichnet, daß die Zylindereinheit (18) einen beidseitig beaufschlagbaren Kolben (21) und beidseitig hieran anschließende Kolbenstangen (22, 23) aufweist, wobei mittels Endschalter (24 bis 26) eine Wegüberwachung stattfindet.

8. Einrichtung nach einem der Ansprüche 1 bis 6, dadurch gekennzeichnet, daß die Einlegeteile (9) durch eine automatische Teilekontrolle geprüft werden und über eine automatische Zuführungshilfe wie Rütteltopf (11) oder dergleichen dem Zuführungskanal (15) zugeführt werden.

## Claims

1. Device for the continuous supply and positioning of insertion parts (9) in a mould tool (5) or mould insert (5) of a die-casting or injection moulding machine, characterised in that a supply channel (15) leading into the region of the mould tool (5) is provided, which channel serves to receive and supply insertion parts, and that means (17, 18) for positioning with the correct attitude of an insertion part (9) removed from the supply channel (15), in the mould tool (5) are provided.

2. Device according to Claim 1, characterised in that for a conveyance of the insertion parts (9) by gravity, a supply opening (13) is located in the upper region (14) of a mould frame (3), which receives the supply channel (15) with a drop.

3. Device according to Claim 1, characterised in that in the region of the mould tool (5), the supply channel (15) opens into a type of receiving pocket or receiving bore (19) for an individual insertion part (9) and that means (17, 18) are provided for the further transportation of the insertion part (9) from the receiving bore (19) to the predetermined end position in the mould tool (5).

4. Device according to Claim 1 or 3, characterised in that the supply channel (15) for the insertion parts (9) opens into a rotary disc (17), which comprises a holder (19) for an individual insertion part (9), that the rotary disc (17) in a for example 90°-rotary movement, aligns the insertion part (9) with the mould tool (5) and that means (18, 22) are provided for ejecting and positioning the insertion part (9) in the correct attitude in the mould tool (5).

5. Device according to Claim 1 or 4, characterised in that associated with the supply channel (15) for the insertion parts (9) is a rotary disc (17) with a receiving space (19) for the insertion part (9), in which case a cylinder unit (18) with a piston rod (22) positions the insertion part (9), after carrying out a rotary movement of the rotary disc (17), with the correct attitude and in an exact position in the mould tool (5).

6. Device according to one of the preceding Claims, characterised in that the cylinder unit (18) has an additional function of ejecting parts.

7. Device according to Claim 5, characterised in that the cylinder unit (18) comprises a piston (21) able to be acted upon on both sides and piston rods (22, 23) adjoining the piston on both sides, in which case monitoring of the displacement takes place by means of limit switches (24 to 26).

8. Device according to one of Claims 1 to 6, characterised in that the insertion parts (9) are checked by an automatic parts control arrangement and are supplied by means of automatic supply means such as a vibrating cup (11) or the like to the supply channel (15).

## Revendications

1. Dispositif destiné à l'amenée continue et au positionnement de pièces d'insertion (9) dans un outil de conformation (5) ou un insert de moule (5) d'une machine de coulée sous pression ou de moulage par injection, caractérisé en ce qu'il est prévu un canal d'amenée (15) débouchant dans la zone de l'outil de conformation (5), qui sert à la réception et à l'amenée de pièces d'insertion, et en ce que des moyens (17, 18) sont prévus pour le positionnement précis dans l'outil de conformation (5) d'une pièce d'insertion (9) prélevée du canal d'amenée (15).

2. Dispositif selon la revendication 1, caractérisé en ce qu'un orifice d'amenée (13) est disposé dans la partie supérieure (14) d'un cadre (3) de moule pour le transport par gravité des pièces d'insertion (9), dans lequel le canal d'amenée (15) débouche en pente.

3. Dispositif selon la revendication 1, caractérisé en ce que le canal d'amenée (15) débouche dans la zone de l'outil de conformation (5) dans un genre de poche de réception ou perçage de réception (19) destiné à une pièce d'insertion (9) individuelle, et en ce que des moyens (17, 18) sont prévus pour continuer à transporter la pièce d'insertion (9) entre le perçage de réception (19) et la position finale prédéterminée dans l'outil de conformation (5).

4. Dispositif selon la revendication 1 ou 2, caractérisé en ce que le canal d'amenée (15) pour les pièces d'insertion (9) débouche dans un disque rotatif (17) comportant une réception (19) pour une pièce d'insertion (9) individuelle, en ce que, par un mouvement de rotation de, par exemple, 90°, le disque rotatif (17) oriente la pièce d'insertion (9) en direction de l'outil de conformation (5), et en ce que des moyens (18, 22) sont prévus pour l'éjection et le positionnement précis de la pièce d'insertion (9) dans l'outil de conformation (5).

5. Dispositif selon la revendication 1 ou 4, caractérisé en ce qu'un disque rotatif (17) comportant un espace de réception (19) pour la pièce d'insertion (9) est associé au canal d'amenée (15) pour les pièces d'insertion (9), un vérin (18) avec une tige (22) de piston positionnant la pièce d'insertion (9) en position exacte et précise dans l'outil de conformation (5) après l'exécution d'un mouvement de rotation du disque rotatif (17).

6. Dispositif selon l'une quelconque des revendications précédentes, caractérisé en ce que le vérin (18) comporte une fonction supplémentaire d'éjection de pièces.

7. Dispositif selon la revendication 5, caractérisé en ce que le vérin (18) comporte un piston (21) pouvant être alimenté des deux côtés, et des tiges (22, 23) de piston qui s'y raccordent des deux côtés, une surveillance de course étant effectuée au moyen d'interrupteurs de fin de course (24 à 26).

8. Dispositif selon l'une quelconque des revendications 1 à 6, caractérisé en ce que les pièces d'insertion (9) sont vérifiées par un contrôle automatique de pièces, et sont amenées au canal d'amenée (15) par l'intermédiaire d'un auxiliaire d'amenée automatique tel qu'un pot vibrant (11) ou analogue.
